# EUROPÄISCHE PATENTANMELDUNG

(11) **EP 4 096 047 A1**
(43) Veröffentlichungstag der Anmeldung: **30.11.2022**
(21) Anmeldenummer: 21176104.4
(22) Anmeldetag: 27.05.2021
(51) Int. Cl.: H02J 3/36

(54) **ELEKTRISCHE EINRICHTUNG SOWIE VERFAHREN ZUM BETREIBEN DER ELEKTRISCHEN EINRICHTUNG**

(71) Anmelder: Siemens Energy Global GmbH & Co. KG, 81739 München (DE)
(72) Erfinder: Schacherer, Christian, 92364 Deining (DE); Hügelschäfer, Ludwig, 96114 Hirschaid (DE); Lange, Dennie, 91058 Erlangen (DE)

(57) **Zusammenfassung**

Die Erfindung betrifft eine Elektrische Einrichtung (12), insbesondere für Hoch- und Mittelspannungstechnik, umfassend wenigstens eine Messvorrichtung (14a-c) zum Erfassen von Messwerten. Die Erfindung zeichnet sich durch wenigstens einen Empfänger (17a-c) zum Empfangen und Verarbeiten von Signalen eines Satellitennavigationssystems (18) aus, der dazu eingerichtet ist, mittels eines Zeitsignals des Satellitennavigationssystems einem erfassten Messwert einen Zeitstempel zuzuordnen. Die Erfindung betrifft ferner ein Verfahren zum Betreiben der erfindungsgemäßen Einrichtung, bei dem mittels des Zeitsignals des Satellitennavigationssystems dem erfassten Messwert der Zeitstempel zugeordnet wird.

## Beschreibung

Die Erfindung betrifft eine Elektrische Einrichtung, insbesondere für Anwendungen in Hoch- und Mittelspannungstechnik, umfassend wenigstens eine Messvorrichtung zum Erfassen von Messwerten.

Eine solche elektrische Einrichtung kann beispielsweise eine Konverterstation (Stromrichterstation) eines Hochspannungsgleichstromübertragungssystems sein. Ein Hochspannungsgleichstromübertragungssystemen (HGÜ bzw. HVDC) weist üblicherweise eine Transmissionsstrecke (Kabel oder Überlandleitungen) sowie Konverterstationen an beiden Enden der Transmissionsstrecke auf, die den Strom für die Übertragung gleich- und zur Eispeisung in AC-Systeme wieder wechselrichten. Die Transmissionsstrecke kann sehr kurz sein (wenige hundert Meter) oder mehrere hundert Kilometer betragen. Es können auch mehr als zwei Konverterstationen an eine Transmissionsstrecke angeschlossen werden. Man spricht dann von einem Multiterminalsystem.

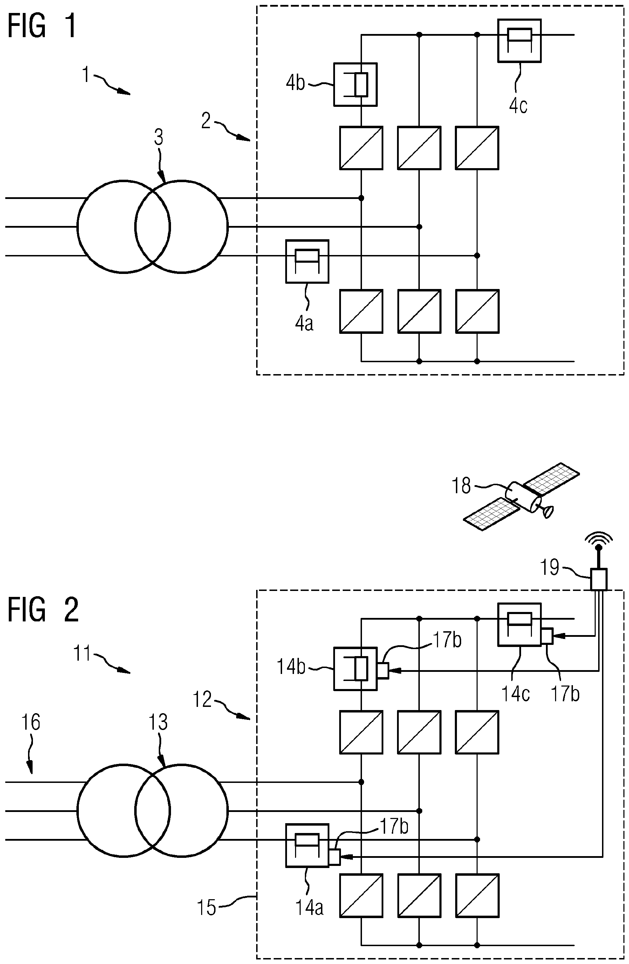

Figur 1 zeigt eine typische HGÜ-Stromrichteranordnung 1 mit einer Stromrichterstation 2. Im dargestellten Beispiel umfasst die Stromrichterstation 2 einen modularen Mehrstufenstromrichter, dessen Wechselspannungsseite mittels eines Stromrichtertransformators 3 mit einem Wechselspannungsnetz verbunden ist. Der Mehrstufenstromrichter weist Stromrichterarme, die jeweils zwischen einem Wechselspannungsanschluss und einem Gleichspannungsanschluss angeordnet sind und eine Reihenschaltung von Schaltmodulen umfassen, die mit Halbleiterschaltern und Energiespeichern ausgestattet sind. Im Betrieb der Stromrichterstation 2 muss ein durch den Stromrichter fließender Strom gemessen werden, um den Betrieb und den Schutz der Stromrichterstation und des ganzen Übertragungssystems sicherzustellen. Die in Figur 1 gezeigten Strom-Messvorrichtungen 4a-c können in realen Anlagen mehrere zehn bis hunderte Meter voneinander entfernt sein.

Es ist denkbar, dass in künftigen Multiterminalsystemen und vermaschten Übertragungssystemen zudem selbstständige Schaltelemente wie HVDC Breaker eingesetzt werden, die ebenfalls mit einer Strommessstelle ausgestattet werden und sich weit entfernt von den Konverterstationen befinden können. Für die Messung des Gleichstroms werden oftmals besondere, digitale Strommesswandler eingesetzt, insbesondere, um eine Integrierung des Schutz- und Regelsystems zu ermöglichen. Bei digitalen Strommesswandlern muss nach der anwendbaren Norm (bsp. DIN EN 61869 Teil 6 bzw. Teil 9) für eine bestimme Genauigkeitsklasse neben der Abweichung bei der Amplitude der Phasenfehler (Fehlwinkel bzw. zeitliche Verzögerung) gemessen werden. Der Fehlwinkel gibt die Verschiebung zwischen dem Messsignal eines Referenzmesssystem und dem zu prüfenden Messsystem an. Dazu kann ein gemeinsames Synchronisationssignal (Clock) verwendet werden, das als Zeitstempel für das Messsignal im Referenzmesssystem und das zu prüfende Messsystem verfügbar ist. Mit diesem Zeitstempel lassen sich die einzelnen Messpunkte der beiden Messsysteme zeitlich eindeutig zuordnen, unabhängig einer nachgeschalteten digitalen Verarbeitung und der damit verbundenen zeitlichen Verzögerung der Messsignale.

Insbesondere bei örtlich weit verteilten Messeinrichtungen, wie sie bei HGÜ Anlagen üblich sind, ist es technisch herausfordernd, die gemessenen Werte (zeitlich) eindeutig zuzuordnen und zu vergleichen. Gründe dafür sind insbesondere Verzögerungen im Messsystem. Das liegt u.a. an den Signallaufzeiten in den dort eingesetzten Lichtwellenleitern und busbasierter, paketweiser Verarbeitung der digitalisierten Messsignale in der Leittechnik. Ohne einen Zeitstempel ist in diesen Systemen eine präzise Synchronisierung der Messsignale derzeit nicht möglich.

Zur Lösung der oben beschriebenen Herausforderungen wird typischerweise eine zentrale Clock-Vorrichtung verwendet, die die einzelnen Messstellen synchronisiert. Ein Beispiel hierfür ist die Verwendung eines Network Time Protokolls (NTP). Bei diesem System werden in einem Kommunikationsnetz die angeschlossenen Geräte (Clients oder Slaves) von einer zentralen Uhr über das Netzwerk synchronisiert. Rechnersysteme beziehen bei Internetzugang diesen Zeitstempel über zentrale Server. Prinzipiell ist der NTP Zeitstempel 64 Bit lang. 32 Bits kodieren zum Bespiel die Sekunden seit dem 1. Januar 1900 00:00:00 Uhr, weitere 32 Bits den Sekundenbruchteil. Auf diese Weise lässt sich ein Zeitraum von etwa 136 Jahren mit einer Auflösung von etwa 0,23 Nanosekunden darstellen. Diese theoretische Genauigkeit wird in realen Systemen nicht erreicht. Kurzzeitige pseudo-stochastische Abweichungen der lokalen Systemuhr in einem Client können nur durch eine bessere Systemuhr kompensiert werden. Übliche Genauigkeiten in einem NTP System sind einige Mikrosekunden. Eine zusätzliche Herausforderung stellt die Sicherheit dieses Systems mit zentralen Zeitservern im Internet dar.

Eine Alternative ist das Precision Time Protocol (PTP). Mit diesem Protokoll kann in einem begrenzten Netzwerk eine höhere Genauigkeit für Hardwareanwendungen im Bereich von Nanosekunden erreicht werden. Bei PTP verteilt ein Master das Zeitsignal an seine Slaves zur Ermittlung der sogenannten Verzögerung. Dazu wird eine Zeitmarke in Form einer Sync Message von der Master-Referenzuhr an die Slaves versandt. Bei bekannten Lauf- und Verarbeitungszeit der Messignale können in einem Typ- oder Routinetest von Messwandlern ohne Zeitstempel die gesamte Verzögerungszeit abgeschätzt werden. Die Abschätzung der Gesamtverzögerung des Messsignals erfolgt durch Aufsummierung der einzeln bestimmten Verzögerungen der Bauelemente. Anschließend werden bei den Vergleichsmessungen diese als feste Verzögerungen rechnerisch berücksichtigt, mit einer zeitlichen Korrektur der Messsignale.

Die Aufgabe der Erfindung ist es, eine oben genannte Einrichtung vorzuschlagen, die insbesondere bezüglich der Messung betriebsrelevanter Größen möglichst zuverlässig ist.

Die Aufgabe wird bei einer artgemäßen elektrischen Einrichtung erfindungsgemäß durch wenigstens einen Empfänger zum Empfangen und Verarbeiten von Signalen eines Satellitennavigationssystems (nachfolgend auch als Satellitenempfänger bezeichnet) gelöst, der dazu eingerichtet ist, mittels eines Zeitsignals des Satellitennavigationssystems einem erfassten Messwert einen Zeitstempel zuzuordnen. Erfindungsgemäß wird eine Verwendung von Signalen eines Satellitennavigationssystems, beispielsweise von GPS-Signalen (wobei andere Systeme ebenfalls geeignet sein können) zur dezentralen Synchronisierung von Messsignalen, insbesondere in HGÜ Systemen vorgeschlagen. Die Synchronisierung betrifft zweckmäßigerweise allgemein die Synchronisation von Messsignalen aller Messstellen im System zur Verarbeitung in einer Leitstelle oder z.B. zur Dokumentation der Ströme im Betrieb der Anlage, die z.B. zum Nachweis der Funktion, Einhaltung der Spezifikation oder auch zur nachträglichen Fehlersuche verwendet werden können. Die Synchronisation kann zudem auch zur normkonformen Bestimmung der Genauigkeitsklasse des Messsystems herangezogen werden. Die wenigstens eine Messvorrichtung kann mit einem Empfänger zum Empfangen und Verarbeiten von Signalen eines Satellitennavigationssystems auch bei bestehenden Anlagen nachgerüstet werden.

Um die Messsignale unabhängig von der Lauf- und Verarbeitungszeit synchronisieren zu können, kann jedem analogen Messwert geeigneterweise bei dessen Digitalisierung ein Zeitstempel angehängt werden. Der Zeitstempel wird gemäß einer besonders einfachen Variante in einem handelsüblichen GPS-Modul oder GPS-Empfänger generiert. Mit diesem Zeitstempel lassen sich die einzelnen Messwerte der gesamten Anlage zeitlich eindeutig zuordnen und verarbeiten.

Der Satellitenempfänger (z.B. GPS-Empfänger) wird über das Satellitennavigationssystem laufend synchronisiert. Beispielsweise sind GPS-Satelliten mit einer Atomuhr ausgestattet. Das Timing des GPS-Signals ist daher sehr akkurat. Wenn ein GPS-Empfänger einen Empfang zu den GPS-HF-Signalen hergestellt hat, die mit einer Aktualisierungsrate von 1575 MHz kontinuierlich Daten übertragen, wird seine interne Uhr synchronisiert. Die Aktualisierungsrate des GPS-Empfängers legt fest, wie regelmäßig Daten von dem kontinuierlichen HF-Signal abgetastet werden können. Die gängigste Aktualisierungsrate für kostengünstige einfache GPS-Empfänger ist einmal pro Sekunde. Teurere und leistungsstärkere GPS-Empfänger können eine höhere Aktualisierungsrate aufweisen.

Vorzugsweise ist der Zeitstempel innerhalb einer vorgegebenen Zeitspanne eindeutig. Insbesondere kann ein gleicher Zeitstempel wiederholt nach Ablauf der vorgegebenen Zeitspanne vergeben werden, beispielsweise nach Ablauf einer Zeitspanne von einer Sekunde (oder einer Anzahl von n Sekunden, n<100). Dies wird auch als rollierender Zeitstempel bezeichnet, mittels dessen der Speicheraufwand und der Aufwand zur Datenübertragung reduziert werden können.

Zweckmäßigerweise berücksichtigt der Zeitstempel eine Laufzeit des Zeitsignals. Insbesondere ist hierbei eine Berücksichtigung des Ortes der einzelnen Messpunkte, in denen das Messsignal digitalisiert wird bzw. die relative Position zueinander. Das gesendete Zeitsignal vom Satelliten kommt bei jedem Messpunkt im Allgemeinen zu einem anderen Zeitpunkt an. Eine Korrektur ist daher vorteilhaft.

Gemäß einer Ausführungsform wird die Laufzeit mittels differenzieller Satellitennavigation (DS) berücksichtigt. Das Grundprinzip der DS ist es, zwei Satellitenempfänger (bsp. GPS-Empfänger) nahe beieinander zu betreiben. Ist dabei bei einem Empfänger (Referenzempfänger) die exakte Position bekannt, ist es möglich, die Abweichung (Differenz) zwischen dem tatsächlichen und dem gemessenen Pseudorange zu erkennen und Korrekturdaten zu erzeugen. Diese Korrekturdaten werden geeigneterweise per Funk übermittelt. Da die Messvorrichtung mit dem Satellitenempfänger die Fehlergrößen dann kennt, kann er die eigene Messung mit den Korrekturdaten anpassen und so seine exakte Position bzw. Zeit bestimmen.

Bevorzugt ist die Einrichtung zur Verwendung eines Network Time Protocols (NTP) eingerichtet. Mit einer kombinierten Verwendung der Satellitennavigation und des NTP ist vorteilhaft eine weitere Verbesserung der Genauigkeit der Synchronisierung ermöglicht.

Gemäß einer Ausführungsform der Erfindung ist die wenigstens eine Messvorrichtung eine Strom- oder eine Spannungsmessvorrichtung. Die Stromessvorrichtung kann beispielsweise ein sogenannter digitaler Strommesswandler sein. Die Messvorrichtung kann insbesondere einen Fast Resistive Current Transducer (FRCT) umfassen, der die analog gemessenen Signale digitalisiert und zur Verarbeitung an eine Leittechnik, insbesondere eine Regelungseinrichtung einer Stromrichterstation übermittelt.

Gemäß einer weiteren Ausführungsform der Erfindung umfasst die wenigstens eine Messvorrichtung eine externe Antenne zur Vermeidung elektromagnetischer Störungen (wie z.B. Oberflächenentladungen). In Gebäuden, wie beispielsweise in einer Halle einer Stromrichterstation, ist der Satellitenempfang oftmals stark reduziert. Im konkret gegebenen Fall hängt die Empfangsmöglichkeit neben den verwendeten Baustoffen im Gebäude und deren Dämpfungsverhalten vom Standort innerhalb eines Gebäudes ab. In Fensternähe bzw. in Räumen mit großen Fenstern und freier Sicht auf den Himmel ist je nach momentaner Satellitenposition durchaus noch eine Standortbestimmung mit reduzierter Genauigkeit möglich. In abgeschatteten Räumen wie beispielsweise Kellern ist der Satellitenempfang hingegen praktisch unmöglich. Mit neueren Empfänger-Chipsätzen ist in manchen Situationen wie in Gebäuden ein Satellitenempfang durch in Hardware massiv parallelisierte Korrelationsempfänger möglich. Allerdings ist bei indirektem Empfang von Satellitenempfang über Reflexionen eine Reduktion der Genauigkeit verbunden, da das Signal dann eine längere Laufzeit aufweist und die genauen zeitlichen Bezüge nicht mehr passen. Der zusätzliche Fehler über Mehrwegeempfang kann einige 10 m betragen. Die vorstehend beschriebenen Schwierigkeiten können vorteilhaft dadurch überwunden werden, dass eine externe Antenne vorgesehen ist, die beispielsweise außen an einem Gebäude befestigt wird, in dem sich der Satellitenempfänger angeordnet ist, wobei die Antenne mit dem Satellitenempfänger verbunden ist. Die Position der Antenne relativ zu dem Ort der Messvorrichtung ist grundsätzlich bekannt und muss bei der Zeitbestimmung berücksichtigt und ggf. korrigiert werden.

Die Erfindung betrifft ferner ein Verfahren zum Betreiben einer elektrischen Einrichtung.

Die Aufgabe der Erfindung ist es, ein solches Verfahren anzugeben, das insbesondere bezüglich der Messung betriebsrelevanter Größen der elektrischen Einrichtung möglichst zuverlässig ist.

Die Aufgabe wird erfindungsgemäß bei einem artgemäßen Verfahren dadurch gelöst, dass nach einem der vorangehenden Ansprüche, bei dem mittels eines Zeitsignals eines Satellitennavigationssystems, das mittels eines Empfängers zum Empfangen und Verarbeiten von Signalen eines Satellitennavigationssystems empfangen wurde, einem Messwert, der mittels einer Messvorrichtung erfasst wurde, ein Zeitstempel zugeordnet wird.

Die Vorteile des erfindungsgemäßen Verfahrens ergeben sich insbesondere aus denjenigen Vorteilen, die im Zusammenhang mit der erfindungsgemäßen elektrischen Einrichtung zuvor beschrieben wurden.

Die Erfindung soll nachfolgend anhand der Figur 2 weiter erläutert werden.

Figur 2 zeigt ein Ausführungsbeispiel einer erfindungsgemäßen elektrischen Einrichtung in einer schematischen Darstellung.

In Figur 2 ist eine typische Stromrichteranordnung 11 mit einer Stromrichterstation 12 dargestellt. Die Stromrichterstation 12 ist zum Teil in einer Stromrichterhalle 15 untergebracht bzw. angeordnet. Im dargestellten Beispiel umfasst die Stromrichterstation 12 einen modularen Mehrstufenstromrichter, dessen Wechselspannungsseite mittels eines Stromrichtertransformators 13 mit einem Wechselspannungsnetz 16 verbunden ist. Im Betrieb der Stromrichterstation 12 werden unterschiedliche Ströme mittels Messvorrichtungen 14a, 14b, 14c gemessen.

Jede der Messvorrichtungen 14a-c ist mit einem Empfänger 17a, 17b bzw. 17c ausgestattet, der zum Empfangen und Verarbeiten von Signalen eines Satellitennavigationssystems 18 eingerichtet ist (wobei das Satellitennavigationssystem 18 im Allgemeinen eine Mehrzahl von Satelliten umfassen kann). Die Empfänger 17a-c sind jeweils mit einer außen an der Stromrichterhalle 15 angeordneten Antenne 19 verbunden (mittels einer kabelgebundenen oder kabellosen Verbindung), so dass die Zeitsignale aus dem Satellitennavigationssystem 18 zunächst zur Antenne 19 gelangen und von dort an die Empfänger 17a-c übermittelt werden.

Die Empfänger 17a-c empfangen die Zeitsignale und verarbeiten diese, anschließend ordnen sie jedem mittels der zugeordneten Messvorrichtung 14a-c erfassten (und digitalisierten) Messwert einen Zeitstempel zu, der innerhalb einer Zeitspanne von einer Sekunde eindeutig ist (und sich danach entsprechend zyklisch wiederholt). Die Zuordnung des Zeitsignals erfolgt unter Berücksichtigung der Laufzeitunterschiede der Signale. Der jeweilige Messwert mit dem zugewiesenen Zeitstempel wird anschließend zur weiteren Auswertung an eine zentrale Regelungseinrichtung der Stromrichterstation 12 übermittelt.

## Patentansprüche

1. Elektrische Einrichtung (12), insbesondere für Hoch- und Mittelspannungstechnik, umfassend wenigstens eine Messvorrichtung (14a-c) zum Erfassen von Messwerten,
**gekennzeichnet durch**
wenigstens einen Empfänger (17a-c) zum Empfangen und Verarbeiten von Signalen eines Satellitennavigationssystems (18), der dazu eingerichtet ist, mittels eines Zeitsignals des Satellitennavigationssystems (18) einem erfassten Messwert einen Zeitstempel zuzuordnen.

2. Einrichtung (12) nach Anspruch 1, wobei der Zeitstempel innerhalb einer vorgegebenen Zeitspanne eindeutig ist.

3. Einrichtung (12) nach einem der vorangehenden Ansprüche, wobei der Zeitstempel eine Laufzeit des Zeitsignals berücksichtigt.

4. Einrichtung (12) nach Anspruch 3, wobei die Laufzeit mittels differenzieller Satellitennavigation berücksichtigt wird.

5. Einrichtung (12) nach Anspruch 2 oder 3, wobei die Einrichtung zur Verwendung eines Network Time Protocols eingerichtet ist.

6. Einrichtung (12) nach einem der vorangehenden Ansprüche, wobei die elektrische Einrichtung eine Stromrichterstation (12) ist.

7. Einrichtung (12) nach einem der vorangehenden Ansprüche, wobei die wenigstens eine Messvorrichtung (14a-c) eine Strom- oder eine Spannungsmessvorrichtung ist.

8. Einrichtung (12) nach einem der vorangehenden Ansprüche, wobei die wenigstens eine Messvorrichtung eine externe Antenne (19) zur Vermeidung elektromagnetischer Störungen umfasst.

9. Verfahren zum Betreiben einer elektrischen Einrichtung (12) nach einem der vorangehenden Ansprüche, bei dem mittels eines Zeitsignals eines Satellitennavigationssystems (18) einem erfassten Messwert ein Zeitstempel zugeordnet wird.
